# EUROPÄISCHE PATENTSCHRIFT

(11) **EP 2 946 892 B1**
(45) Veröffentlichungstag und Bekanntmachung des Hinweises auf die Patenterteilung: **04.07.2018**
(21) Anmeldenummer: 15168646.6
(22) Anmeldetag: 21.05.2015
(51) Int. Cl.: B27D 5/00, B23C 3/12

(54) **KANTENBEARBEITUNGSVORRICHTUNG**
EDGE PROCESSING DEVICE
DISPOSITIF D'USINAGE DE CHANTS

(30) Priorität: 22.05.2014 DE 102014209775
(43) Veröffentlichungstag der Anmeldung: 25.11.2015
(73) Patentinhaber: HOMAG GmbH, 72296 Schopfloch (DE)
(72) Erfinder: Schlotter, Rainer, 72160 Horb (DE); Kercher, Klaus, 72296 Schopfloch (DE)
(74) Vertreter: Hoffmann Eitle

(56) Entgegenhaltungen:
- EP-A1- 1 430 996
- WO-A1-88/10182
- WO-A2-97/11812
- DE-A1- 2 818 034
- DE-A1- 4 113 543
- DE-A1- 19 521 155
- DE-A1- 19 834 440
- DE-A1-102007 029 918
- DE-U- 7 408 349

## Beschreibung

### TECHNISCHES GEBIET

Die vorliegende Erfindung betrifft eine Kantenbearbeitungsvorrichtung zum Bearbeiten eines an einem Werkstück angebrachten Kantenmaterials, gemäß dem Oberbegriff des Anspruchs 1. Die Vorrichtung ist insbesondere dafür vorgesehen, eine Leimfuge zwischen dem Kantenmaterial und dem Werkstück nachzuarbeiten. Zudem betrifft die vorliegende Erfindung ein entsprechendes Verfahren zum Bearbeiten eines an einem Werkstück angebrachten Kantenmaterials, gemäß dem Oberbegriff des Anspruchs 6.

### STAND DER TECHNIK

Obwohl heutige Bearbeitungszentren Kanten mit einer hohen Präzision an einem Werkstück anbringen können, ist trotzdem im Regelfall weiterhin eine Nachbearbeitung der Kante notwendig, um ein optimales Bearbeitungsergebnis zu erzielen. Bei der Nachbearbeitung wird im Wesentlichen die Kante mit der Leimfuge mechanisch so bearbeitet, dass diese mit dem Werkstück bzw. der Werkstückoberfläche bündig sind, sodass auch höchste optische Anforderungen erfüllt werden. Diese können beispielsweise darin bestehen eine Kante zu erzeugen, die zusammen mit dem Werkstück wie aus einem Guss aussieht.

Üblicherweise erfolgt das Bearbeiten des Randbereichs eines Werkstücks in mehreren Schritten. So wird in einem ersten Nachbearbeitungsschritt mittels eines Fräswerkzeugs das Kantenmaterial nahezu bis zur Werkstückoberfläche bündig gefräst. In nachfolgenden Bearbeitungsschritten wird die gefräste Oberfläche durch Verwendung einer Ziehklinge geglättet, die im Wesentlichen einen Span von der Kante abträgt, und Leimreste der Leimfuge werden mit Hilfe eines Messers entfernt.

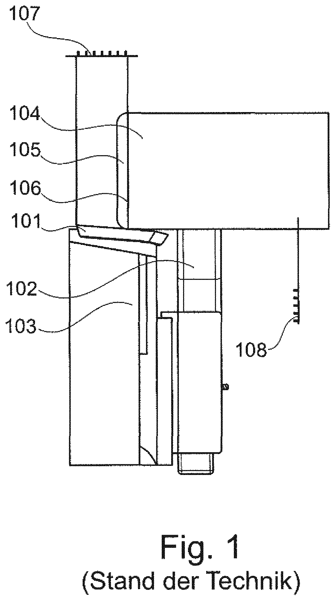

Die Zustellung des jeweiligen Werkzeugs an den zu bearbeitenden Bereich erfolgt durch Einsatz eines Tastschuhs, der die Schneide des Werkzeugs an der Werkstückoberfläche entlang tastend durch die überstehenden Bereiche des Kantenmaterials und der Leimfuge führt. Eine derartige aus dem Stand der Technik bekannte Tastvorrichtung ist in Fig. 1 dargestellt. Bei ihr dient ein Leimfugenmesser 101 zur Nachbearbeitung einer Leimfuge 106, über die eine Kante 105 an dem Werkstück 104 angebracht ist.

Das Leimfugenmesser 101 ist an einem Halter 103 befestigt. Weiterhin weist die Vorrichtung einen Tastschuh 102 auf, der ebenfalls fest mit der Halterung 103 verbunden ist, sodass das Leimfugenmesser und der Tastschuh kinematisch miteinander gekoppelt sind. Mit anderen Worten wird eine durch die Werkstückoberfläche verursachte Bewegung, z. B. in der vertikalen Richtung 108, über den Halter 103 auf das Leimfugenmesser 101 übertragen.

Für eine einwandfreie Führungsbewegung ist es folglich unabdingbar, dass die relative Position zwischen Tastschuh und Leimfugenmesser sehr genau eingestellt wird, damit die Leimreste vollständig entfernt werden ohne dabei mit dem Messer in die Werkstückoberfläche zu schneiden. Hierbei hat es sich bewährt, die Gefahr des Einschneidens in die Werkstückoberfläche zu verringern, indem das Leimfugenmesser um ein paar Grad geneigt zur Werkstückoberfläche in Richtung des Kantenmaterials an diesem und der Leimfuge entlang geführt wird.

Wie in Fig. 1 gezeigt, ist das Leimfugenmesser in der Ebene, die von den Richtungen senkrecht zur Längsrichtung des Kantenbands aufgespannt wird, vom Werkstück hin zur Kante geneigt, sodass sich bei einer Änderung des horizontalen Abstandes 107 zwischen dem Leimfugenmesser und dem Werkstück aufgrund der Neigung auch der vertikale Abstand 108 zwischen dem Leimfugenmesser und dem Werkstück ändert. Dieser Effekt entsteht nicht nur durch eine relative Verlagerung des Leimfugenmessers sondern kann genauso über dessen Verschleiß verursacht werden.

Wenn das Leimfugenmesser somit in horizontaler Richtung zu weit in Richtung des Werkstücks bewegt wird, entfernt es somit nicht nur die Leimreste, sondern schneidet zudem in die Werkstückoberfläche. Ein derartig falsch nachbearbeitetes Werkstück wird unweigerlich zu Ausschuss. Wird das Leimfugenmesser hingegen zu weit vom Werkstück wegbewegt, werden die Leimreste nicht zufriedenstellend entfernt. In diesem Fall kann das Werkstück zwar erneut nachbearbeitet werden, jedoch verursacht dies zusätzliche Kosten. Zusätzliche Probleme entstehen bezüglich der Einhaltung des Abstands zwischen dem Leimfugenmesser 101 und dem Werkstück 104, wenn Ecken oder Radien des Werkstücks umfahren werden müssen.

Somit war es Aufgabe der vorliegenden Erfindung, eine Vorrichtung und ein Verfahren bereitzustellen, mit denen eine aufwändige Einstellung des Abstands zwischen dem Werkzeug und dem Werkstück mit der Leimfuge und dem Kantenmaterial überflüssig wird. Insbesondere sollte dabei eine technische Lösung gefunden werden, mit der auch ein Umfahren unregelmäßiger oder komplexer Werkstückgeometrien möglich ist. Besonders hier ist ein optimales Ergebnis selbst bei einem genauen Einstellen des Abstands zwischen Werkzeug und Werkstück aufgrund der Neigung des Werkzeugs nur schwer erreichbar.

Ferner offenbart die DE 19521 155 A eine Kantenbearbeitungs-vorrichtung nach dem Oberbegriff von Anspruch 1 und ein Verfahren nach dem Oberbegriff von Anspruch 6.

### ZUSAMMENFASSUNG DER ERFINDUNG

Die oben beschriebene Aufgabe wird mit der Kantenbearbeitungsvorrichtung nach Anspruch 1 sowie dem Verfahren zum Bearbeiten eines an einem Werkstück angebrachten Kantenmaterials nach Anspruch 6 gelöst.

Mit der vorliegenden Erfindung wird eine Kantenbearbeitungsvorrichtung zum Bearbeiten oder Nachbearbeiten einer an einem Werkstück angebrachten Kante bereitgestellt. Das Bearbeiten erfolgt insbesondere im Bereich einer Leimfuge zwischen Kante und Werkstück. Die Vorrichtung weist einen Werkzeughalter und ein Schneidwerkzeug auf, das mit dem Werkzeughalter verbunden ist. Weiterhin ist eine elastische Einrichtung Teil der Kantenbearbeitungsvorrichtung, wobei die elastische Einrichtung eingerichtet ist, dem Schneidwerkzeug eine Tastkraft bereitzustellen, sodass es mit einer Werkstückoberfläche in Kontakt bringbar ist.

Folglich ist es im Unterschied zum Stand der Technik das Schneidwerkzeug selbst, das sich an der Werkstückoberfläche entlang tastet. Damit entfällt das zeitaufwändige Einstellen der getrennten Tastvorrichtung, welche zuvor für die Funktion des Schneidwerkzeugs notwendig war. Da das Schneidwerkzeug ausschließlich als Tasteinrichtung eingesetzt werden kann, ist zudem der Einsatz der Bearbeitungsvorrichtung weniger fehleranfällig.

Dass sich das Schneidwerkzeug selbst an der Werkstückoberfläche entlangtastet führt zu dem Vorteil, dass das Nachführen an der Werkstückoberfläche unmittelbar neben dem Bereich des Schneidwerkzeugs erfolgt, in dem ungewünschte Überstände am Kantenmaterial bzw. Kantenband und/oder Leimfuge entfernt werden. Die Leimfuge kann dabei jegliche Art von Haftmitteln bzw. Klebern sowie Funktionsschichten zum Beinflussen der Eigenschaften der Leimfuge oder des herzustellenden Produkts enthalten. In jedem Fall wird bei der vorliegende Erfindung Unstetigkeiten bei der Bearbeitung vorgebeugt.

Auch kann die erfindungsgemäße Kantenbearbeitungsvorrichtung kompakter ausgeführt werden, da der Raum für die zusätzliche Tastvorrichtung entfällt.

Die zur Verfügung gestellte Tastkraft ist dabei mindestens so hoch gewählt, dass sie gleichzeitig als Zustellkraft geeignet ist, um das Schneidwerkzeug durch Überstände im Bereich der Kante und der Leimfuge zu führen. Dass heißt die Tastkraft reicht aus, um das Schneidwerkzeug mit etwaigen Überständen in Eingriff zu bringen, um die gewünschten Schnitte bzw. spanende Bearbeitung durchzuführen. Andererseits ist die Tastkraft nur so hoch eingestellt, dass die Tast- bzw. Zustellkraft nicht ausreicht, um einen Schneidvorgang in die Werkstückoberfläche auszuführen, wenn die Schneidkante des Schneidwerkzeugs auf der Werkstückoberfläche entlang geführt wird. Folglich kann das Schneidwerkzeug als alleinige Tastvorrichtung für die Achsrichtung dienen, die für das Bearbeiten bzw. Schneiden entlang der Werkstückoberfläche vorgesehen ist.

Erfindungsgemäß weist die elastische Einrichtung der Kantenbearbeitungsvorrichtung eine elastische Schneidwerkzeugaufhängung auf. Diese Schneidwerkzeugaufhängung ist zwischen dem Schneidwerkzeug und dem Werkzeughalter angeordnet.

Dadurch, dass zumindest ein Teil der elastischen Einrichtung möglichst nahe am Schneidwerkzeug angeordnet ist, sind die Momente, welche auf die elastische Schneidwerkzeugaufhängung wirken aufgrund der geringen Hebelwirkung relativ niedrig, sodass die Schneidwerkzeugaufhängung insbesondere hinsichtlich der Einstellung der Neigung des Schneidwerkzeugs, d. h. im Rahmen ihrer rotatorischen Freiheitsgrade, kompakt ausgelegt werden kann. Erfindungsgemäß ist die elastische Schneidwerkzeugaufhängung dazu eingerichtet, eine Schneidkante des Schneidwerkzeugs im Wesentlichen parallel zur Werkstückoberfläche auszurichten, insbesondere im Wesentlichen parallel auf die Werkstückoberfläche aufzulegen, wobei die Schneidkante entlang der Werkstückoberfläche geführt werden kann und die elastische Schneidwerkzeugaufhängung zumindest einen rotatorischen Freiheitsgrad aufweist.

Diese parallele Ausrichtung des Schneidwerkzeugs stellt ein besonders gutes Bearbeitungsergebnis bereit, indem einem Eingriff in die Werkstückoberfläche vorgebeugt wird, da hier der Unterschied zwischen der Kraft, die notwendig ist, einen Schnittvorgang im Bereich des Kantenmaterials oder der Leimfuge auszuführen, im Verhältnis zu der Kraft, die notwendig ist, um einen ungewünschten Schnitt in der Werkstückoberfläche auszuführen, hier am größten ist. Weiterhin wird das Niveau der Werkstückoberfläche durch den auf die parallel aufliegende Schneidkante zurückzuführenden größeren Tastbereich stabiler auf überstehende, zu entfernende Bereiche übertragen. Dies wird auch durch die räumliche Nähe von Tastung und Schnittbereich unterstützt, welche insbesondere durch die Integration von Tasteinrichtung und Schneidwerkzeug. Folglich ergibt sich durch diese Ausführungsform neben einem hervorragenden Tastergebnis zudem eine besonders saubere Schneidkante.

Bei dieser Ausführungsform ist besonders die zur Werkstückoberfläche parallele Ausrichtung der Schneidkante in Längsrichtung des Kantenmaterials bzw. der Vorschubrichtung wichtig. Daraus folgt, dass bereits ein rotatorischer Freiheitsgrad bei der elastischen Schneidwerkzeugaufhängung genügt, um ein zufriedenstellendes Ergebnis zu erreichen.

Bevorzugt wird aber auch der rotatorische Freiheitsgrad um die Achse, die senkrecht zur Vorschubrichtung auf der Werkstückoberfläche liegt, durch die elastische Schneidwerkzeugaufhängung eingestellt. Hierdurch wird eine auch eine Neigung der Werkstückoberfläche von der Werkstückoberfläche zur Kante hin übertragen. Bei einer so ausgeführten elastischen Einrichtung liegt das Schneidwerkzeug flächig auf der Werkstückoberfläche auf. Erfindungsgemäß weist die elastische Einrichtung eine elastische Werkzeughalteraufhängung zum Verbinden mit einer Werkzeugmaschine auf. Dabei lagert die elastische Werkzeughalteraufhängung das Schneidwerkzeug bevorzugt in dessen Zustellrichtung nachgiebig. Dadurch ist zumindest ein Teil der elastischen Einrichtung auf der Seite der Kantenbearbeitungsvorrichtung angeordnet, auf der die Schnittstelle zur Werkzeugmaschine ausgebildet ist. Zwar fallen die durch Unebenheiten oder Schnittkräfte verursachten Drehmomente hier höher aus, dafür steht aber mehr Raum zur Verfügung, um die elastische Einrichtung konstruktiv auszuführen. So lässt sich beispielsweise einfacher eine stabile Aufhängung erreichen, die in den gewünschten Achsrichtungen gleichzeitig nachgiebig ausgeführt ist.

Bei der elastischen Werkzeughalteraufhängung wird bevorzugt zumindest das Schneidwerkzeug in dessen Zustellrichtung nachgiebig gelagert. Dabei treten im Verhältnis zur Neigung des Schneidwerkzeugs größere Wege auf, die weiter weg vom Schneidwerkzeug und näher an der Schnittstelle zur Werkzeugmaschine leichter aufgenommen werden können. Erfindungsgemäß ist die elastische Einrichtung zweiteilig ausgeführt, bei der die Neigung unmittelbar in der Nähe des Schneidwerkzeug, d.h. zwischen Schneidwerkzeug und Werkzeughalter, durch die Schneidwerkzeugaufhängung eingestellt wird, während die Bewegung in Zustellrichtung durch die elastische Werkzeughalteraufhängung ermöglich wird. Dabei ist es durch diese Aufgabentrennung möglich, für die rotatorischen und translatorischen Freiheitsgrade unterschiedliche Einstellmechanismen zu wählen.

Bei einer weiteren besonders bevorzugten Ausführungsform der Kantenbearbeitungsvorrichtung ist das Schneidwerkzeug zumindest Abschnittsweise als bogenförmige, bevorzugte kreisförmige, oder polygonale Schneidkante ausgeführt.

Im Gegensatz zu den aus dem Stand der Technik bekannten graden Schneidkanten ermöglicht eine erfindungsgemäß ausgebildete Schneidkante auch eine sauberes Nachfahren von Werkstückkanten, die eine komplexe Geometrie aufweisen, wie zum Beispiel Rundungen oder Ecken. Dies wird auch dadurch erreicht, dass das Schneidwerkzeug nicht oder nur geringfügig beim Nachführen um seine senkrecht zur Werkstückoberfläche liegende Achse gedreht werden muss. Insbesondere wenn das Schneidwerkzeug parallel zur Werkstückoberfläche geführt wird, kann auf jegliche Drehung um die genannte Achse verzichtet werden, da es im Gegensatz zu den bekannte Kantenbearbeitungsvorrichtungen nicht notwendig ist, eine Neigung der Schneidkante nachzuführen.

Bei einer weiteren Ausführungsform der vorliegenden Erfindung weist die elastische Einrichtung mindestens ein Element auf, das aus der Gruppe ausgewählt ist, die eine Feder, einen Dämpfer, eine Hydraulik, eine Pneumatik und ein Elastomer aufweist.

Über eine an den Bearbeitungsanforderungen orientierte Kombination dieser Elemente kann eine optimale Tastkraft sichergestellt werden, die gleichzeitig die notwendige Zustellkraft für die Schnittbewegung zur Verfügung stellt. Dabei ist es möglich, ein passives System zu verwenden, welches im Wesentlichen keiner Steuerung oder Regelung bedarf. Genauso kann aber auch ein aktives System verwendet werden, welches beispielsweise eine elektronische Regelung oder Steuerung aufweist, um einen gewünschten Tastvorgang und eine gewünschte Schnittbewegung umzusetzen. Auch liegt eine Kombination aus aktivem und passivem System im Rahmen der Erfindung, um zum Beispiel die Tastkraft bzw. Zustellkraft abhängig von der Elastizität des Werkstücks oder des Werkzeugs nachzuführen.

Bei einer weiteren Ausführungsform der Kantenbearbeitungsvorrichtung ist das Schneidwerkzeug ein Fräser, eine Abziehklinge oder ein Messer.

Folglich ist es mit der erfindungsgemäßen Vorrichtung möglich, nicht nur einen der in der Einleitung beschriebenen Arbeitsschritte auszuführen, sondern es kann stattdessen die Vorrichtung im Rahmen mehreren oder sogar aller Bearbeitungsschritte eingesetzt werden, indem das jeweilige Schneidwerkzeug an der Kantenbearbeitungsvorrichtung befestigt wird.

Weiterhin wird durch die vorliegende Erfindung ein Verfahren zum Bearbeiten eines an einem Werkstück angebrachten Kantenmaterials, insbesondere im Bereich einer Leimfuge zwischen Kante und Werkstück, bereitgestellt. In einem ersten Schritt dieses Verfahrens wird ein Werkstück, auf dem ein Kantenmaterial über eine Leimfuge aufgebracht ist, bereitgestellt. In einem weiteren Schritt des Verfahrens erfolgt ein Zustellen eines Schneidwerkzeugs, sodass das Schneidwerkzeug mit einer von einer elastischen Einrichtung eingestellten Tastkraft aufliegt. Zudem erfolgt gemäß dem erfindungsgemäßen Verfahren eine Vorschubbewegung zwischen dem Schneidwerkzeug und dem Werkstück, bei der das Schneidwerkzeug durch die Tastkraft auf der Werkstückoberfläche aufliegt und es so Unebenheiten zwischen dem Werkstück, der Leimfuge und dem Kantenmaterial entfernt.

Auch bei dem erfindungsgemäßen Verfahren ist, wie zuvor für die erfindungsmäße Vorrichtung beschrieben, keine Tastvorrichtung notwendig. Das aufwendige Einstellen des relativen Abstands zwischen Schneidwerkzeug und Tasteinrichtung entfällt.

Auch hier dient die Werkstückoberfläche bevorzugt als Referenz, von der aus etwaige Überstände im Bereich der Kante und/oder der Leimfuge entfernt werden. Die Tastkraft stellt dabei gleichzeitig die Zustellkraft bereit, die notwendig ist, damit vorhandenen Unebenheiten im Bereich der Leimfuge und/oder des Kantenmaterials nicht einfach gefolgt wird, sondern dass diese durch das Schneidwerkzeug entfernt werden.

Bei einer bevorzugten Ausführungsform des Verfahrens erfolgt das Bearbeiten in mehreren Schritten, und zwar bevorzugt mit unterschiedlichen Werkzeugen.

Folglich kann das Verfahren bei sämtlichen in der Einleitung beschriebenen Bearbeitungsschritten angewandt werden, in denen jeweils der für die Tastvorrichtung erforderliche Einstellaufwand entfällt. Zum Beispiel kann durch entsprechende Wahl der Werkzeuge eine Bearbeitung von grob nach fein erfolgen, um sich dem gewünschten Bearbeitungsergebnis optimal anzunähern. Dabei entfällt bei jedem Bearbeitungsschritt der Einstellaufwand unter Erreichung eines qualitativ hochwertigen Kantenbereichs.

Bei der parallelen Ausrichtung liegt die Schneidkante des Schneidwerkzeugs im sich mit der Werkstückoberfläche überdeckenden Bereich bevorzugt vollständig auf der Werkstückoberfläche auf. Die parallele Ausrichtung des Schneidwerkzeugs erhöht, wie oben beschrieben, den Unterschied zwischen der Zustellkraft, die notwendig ist, Überstande zu entfernen, und der Zustellkraft, die notwendig wäre, um einen Schnitt in die Werkstückoberfläche auszuführen. Folglich wird das Arbeitsergebnis durch die Ausrichtung des Werkzeugs relativ zum Werkstück weiter verbessert.

In Abhängigkeit der Schneidkantengeometrie (siehe zum Beispiel die oben beschriebene bogenförmige Schneidkante) kann diese somit flächig auf der Werkstückoberfläche aufliegen und so einen optimalen Tastvorgang und Schneidvorgang ermöglichen.

Die Werkzeughalteraufhängung ist an der Schnittstelle zwischen der Werkzeugmaschine und der Kantenbearbeitungsvorrichtung angeordnet. Dadurch erfolgt die Bereitstellung der Tastkraft mit einem höheren Bewegungsspielraum, was insbesondere von Vorteil ist, wenn die Aufhängung eine aktive Komponente aufweist.

Bei einer Ausführungsform des Verfahrens wird die Tastkraft des Schneidwerkzeugs so eingestellt, dass sie groß genug ist, um der Werkstückoberfläche zu folgen, aber zu niedrig ist, um in diese einzugreifen.

Mit dieser Einstellung kann das gewünschte Bearbeitungsziel für die Oberfläche des fertiggestellten Werkstücks erreicht werden, und zwar ohne eine zusätzliche Tastvorrichtung.

Bei einer weiteren bevorzugten Ausführungsform des vorliegenden Verfahrens wird das Schneidwerkzeug ohne Änderung seiner Ausrichtung an der Kante bzw. dem Kantenband, der Leimfuge und/oder der Werkstückkante entlang geführt.

Hierdurch ist auch das Umfahren komplexerer Werkstückkanten auf einfache Weise möglich. Unter Ausrichtung ist dabei einerseits eine Neigung relativ zur Werkstückoberfläche verstehen sowie andererseits eine Drehung um die Achse des Schneidwerkzeug, die senkrecht auf der Werkstückoberfläche steht. Dabei erfolgt die Bearbeitung bei dieser Ausführungsform des Verfahrens insbesondere durch ein Schneidwerkzeug, dessen Schneidkante eine der oben genannten Geometrien aufweist.

Bei einer weiteren Ausführungsform des Verfahrens wird das Schneidwerkzeug als ausschließliches Tastwerkzeug zum Aufbringen einer Tastkraft in einer festgelegten Richtung auf das Werkstück verwendet.

Bei dieser Ausführungsform erfolgt das Aufbringen der Tastkraft in mindestens einer Richtung, um das Schneidwerkzeug an einer Werkstückoberfläche entlang zu führen, ausschließlich durch das Schneidwerkzeug. Anders ausgedrückt wird die Tastkraft, die für das Entlangtasten an bzw. Abfahren von einer Werkstückoberfläche in einer Raumrichtung verwendet wird, ausschließlich durch das auch als Tastwerkzeug agierende Schneidwerkzeug bereitgestellt. Bevorzugt wird die Tastkraft dabei senkrecht zur Werkstückoberfläche aufgebracht. Die so aufgebrachte Tastkraft kann somit störungsfrei und definiert bereitgestellt werden.

### BESCHREIBUNG DER FIGUREN

Fig. 1 zeigt ein aus dem Stand der Technik bekanntes Leimfugenmesser mit einer Tastvorrichtung.
Fig. 2 zeigt eine Kantenbearbeitungsvorrichtung gemäß der vorliegenden Erfindung in einer perspektivischen Ansicht schräg von oben.
Fig. 3 zeigt die Kantenbearbeitungsvorrichtung aus Fig. 2 in perspektivischer Ansicht schräg von unten.

### ERLÄUTERUNG BEVORZUGTER AUSFÜHRUNGSFORMEN

Das Schneidwerkzeug der Kantenbearbeitungsvorrichtung der vorliegenden Erfindung ist über einen Werkzeughalter mit der Werkzeugmaschine verbunden. Die elastische Einrichtung weist mehrere Komponenten auf, um ihre Funktion auszuüben. Die Funktion besteht insbesondere darin, eine Tastkraft bereitzustellen, die so gewählt ist, dass sich das Schneidwerkzeug unter ständigem Kontakt mit der Werkstückoberfläche an dieser entlang tastet ohne jedoch in diese einzugreifen. Allerdings muss sie gleichzeitig so hoch gewählt sein, dass eine Bearbeitung zum Entfernen von Überständen, insbesondere im Bereich des Kantenbands und der Leimfuge möglich ist. Folglich stellt die erfindungsgemäße Tastkraft der Bearbeitungsvorrichtung gleichzeitig die erforderliche Zustellkraft bereit, die notwendig ist, um einen geführten Schnitt bzw. eine spanende Bearbeitung mit dem Schneidwerkzeug aufzuführen. Dabei kann diese durch eine möglicherweise vorhandene Neigung des Schneidwerkzeugs und den Schneidwinkel des Werkzeugs beeinflusst sein.

Unter elastischer Einrichtung gemäß der Erfindung ist eine Einrichtung zu verstehen, die reversibel unter Einfluss einer äußeren Kraft nachgibt. Ein solches Verhalten kann sowohl durch aktive als auch passive Mittel, wie auch durch eine Kombination dieser, erreicht werden. Weiterhin ist es möglich, dieses elastische Verhalten mit einer Dämpfung zu versehen.

Eine passive Komponente kann ein Element sein, das seine Elastizität und/oder Dämpfung durch dessen Gestaltung und Materialeigenschaften erhält, wie z. B. eine Spiralfeder. Ein aktives elastisches Element kann ein Element sein, bei dem die Elastizität und/oder Dämpfung durch eine Steuerung oder Regelung eingestellt wird, wie z. B. bei einer Pneumatik oder der Hydraulik der Fall. Letztere können genauso passiv ausgeführt sein, wie zum Beispiel bei einem Stoßdämpfer oder einer Druckfeder.

Vorzugsweise weist die erfindungsgemäße Bearbeitungsvorrichtung einen für die Bearbeitung ausgelegten Bewegungsspielraum auf, um eine möglichst kompakte Bauweise dieser Vorrichtung zu erreichen. Anders gesagt erfolgt die grobe Zustellbewegung der Bearbeitungsvorrichtung bevorzugt über die Aktuatoren der Werkzeugmaschine, während das genaue Nachführen des Schneidwerkzeugs an einer Referenzfläche durch die Bearbeitungsvorrichtung ausgeführt wird. Die Referenzfläche ist bevorzugt die Werkstückoberfläche.

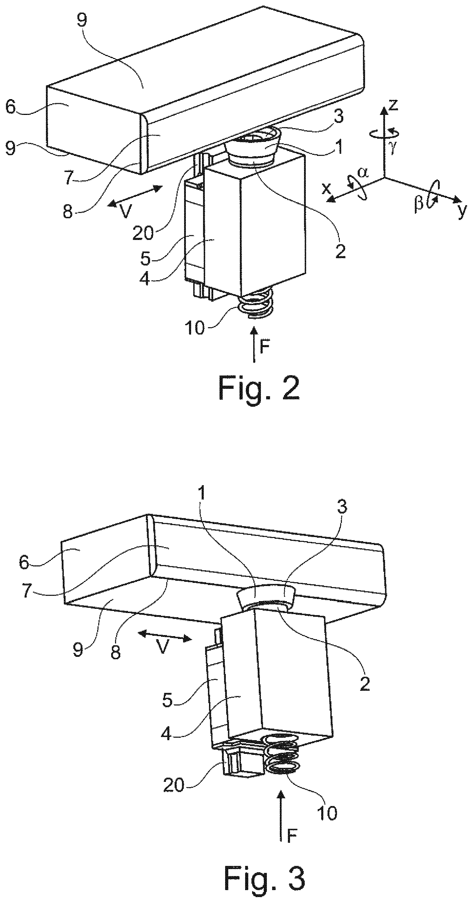

Im Gegensatz zu der aus dem Stand der Technik und in Figur 1 gezeigten bekannten Bearbeitungsvorrichtung ist die in den Figuren 2 und 3 gezeigte Bearbeitungsvorrichtung der vorliegenden Erfindung ohne eine eigenständige bzw. getrennte Tastvorrichtung ausgeführt. Folglich bildet das Schneidwerkzeug 1 gleichzeitig die ausschließliche Tasteinrichtung aus. Ein getrennter Taster 102, wie in Fig.1 gezeigt, entfällt folglich.

Das in die Fig. 2 gezeigte Schneidwerkzeug weist eine kreisförmige Schneidkante auf. Selbstverständlich ist es möglich, diese durch eine gerade Schneidkante, eine der oben genannten oder eine beliebige andere für die Bearbeitung geeignete Schneidkante zu ersetzen. Allerdings haben Schneidkanten, die wie die kreisförmige Schneidkante einen Winkelbereich abdecken, den Vorteil, dass mit ihnen komplexe Werkstückkanten ohne Drehung des Schneidwerkzeugs um seine Z-Achse (Achse senkrecht zur Oberfläche) ausgeführt werden können. Dabei liegt das Werkzeug parallel bzw. flach auf der Werkstückoberfläche auf. Erfindungsgemäß ist das Schneidwerkzeug um die Z-Achse mit einer Nachgiebigkeit versehen, um eine weichere Nachführung des Werkzeugs an der Leimfuge 8, dem Kantenband 7 und/oder der Kante des Werkstücks 6 in der X-Richtung, d.h. entlang der Längsrichtung des Kantenmaterials 7, auszuführen.

Bevorzugt ist das Schneidwerkzeug nicht fest sondern auswechselbar an dem Werkzeughalter 4, zum Beispiel über ein Befestigungselement 3 oder einen nicht gezeigten Schnellverschluss, befestigt. Erfindungsgemäß ist die elastische Einrichtung durch zwei Komponenten 2, 10 ausgebildet. Dabei übernimmt ein elastisches Element 2, welches zwischen dem Schneidwerkzeug 1 und dem Werkzeughalter 4 angeordnet ist, die Einstellung der Neigung des Schneidwerkzeugs 1. Diese Schneidwerkzeugaufhängung ist im vorliegenden beispielhaften Fall durch ein Elastomer ausgebildet. Über das elastische Element 2 wird im Wesentlichen die Nachgiebigkeit um die X- und Y-Achse (α, β) eingestellt. Zudem kann die Schneidwerkzeugaufhängung eine Elastizität um die Z-Achse bereitstellen (γ). Welche der drei rotatorischen Freiheitsgrade der Schneidwerkzeugaufhängung elastisch ausgeführt sind, hängt im Wesentlichen von der jeweiligen Anwendung der Bearbeitungsvorrichtung ab.

Obwohl mit der Schneidwerkzeugaufhängung auch die Einstellung der Elastizität in der Z-Richtung, d.h. der Tastkraft bzw. der Zustellkraft, möglich wäre, übernimmt Erfindungsgemäß ein elastisches Element 10 diese Aufgabe. Es ist vorliegend als Spiralfeder 10 ausgeführt. Es versteht sich, das für die Komponente 2 und 10 jegliche der bereits genannten Maschinenelemente gewählt werden können, man also nicht auf das Ausführungsbeispiel beschränkt ist.

Die Figuren 2 und 3 zeigen, dass zumindest ein Teil der elastische Einrichtung 2, 10 auf der Seite der Werkzeugmaschine 20 angeordnet ist, da hier mehr Bauraum zur Verfügung steht und so mehr Freiheiten bezüglich der Ausgestaltung der elastischen Einrichtung mit den oben genannten Elementen bzw. Komponenten bestehen.

Das elastische Element 10 ist Erfindungsgemäß zwischen dem Werkzeughalter 4 und der restlichen Werkzeugmaschine bzw. des restlichen Aggregats (nicht gezeigt) vorgesehen, welche insbesondere die Vorschubbewegung bereitstellt.

In den Figuren 2 und 3 wird durch das als Spiralfeder dargestellte elastische Element 10 gezeigt. Es ist mit seinem Ende, das seinem mit der Bearbeitungsvorrichtung verbundenen Ende gegenüberliegt, an einem Abschnitt einer Werkzeugmaschine oder eines Aggregats (nicht gezeigt) befestigt. Im vorliegenden Ausführungsbeispiel wird die Bearbeitungsvorrichtung zudem in der Zustellrichtung bzw. Tastrichtung durch die Führungsschiene 20 und den Linearschlitten 5, der mit der Werkzeughalterung 4 verbunden ist, geführt. Alternativ ist auch eine Führung durch das elastische Element 10 möglich, sodass die zusätzliche Linearführung entfallen kann.

Weiterhin ist es auch möglich, die Bearbeitungsvorrichtung bevorzugt nur über die Linearführung 5, 20 mit dem oben erwähnte Maschinenabschnitt zu verbinden. Im Unterschied zu der vorgenannten Ausführungsform entfällt hier das in den Figuren 2 und 3 eingezeichnete elastische Element 10. Statt dessen ist der Werkzeughalter zweiteilig aus dem Werkzeughalter 4 und dem Linearschlitten 5 ausgeführt.

Hierbei kann das elastische Element 10 zwischen den Komponenten 4 und 5 vorgesehen sein. Bevorzugt ist das elastische Element 10 an dieser Stelle ebenfalls für die Einstellung der Nachgiebigkeit senkrecht zur Werkstückoberfläche 9, d.h. in Z-Richtung, vorgesehen.

Genauso ist es möglich, die elastische Einrichtung für die Z-Richtung zwischen dem Werkzeughalterteil 5 und der Führungsschiene 20 der Werkzeugmaschine vorgesehen sein, zum Beispiel in Form eines federnd hin- und her bewegbaren Linearschlittens 5, der auf diese Weise die Tastkraft F bereitstellt.

Auch wenn in den gezeigten Ausführungsformen der Figuren 2 und 3 eine Beweglichkeit der Bearbeitungsvorrichtung in der Z-Richtung im Wesentlichen durch das elastische Element 10 hervorgerufen wird, kann durch das elastische Element 2 ebenfalls eine gewisse Nachgiebigkeit in Z-Richtung vorhanden sein, da die Schneidwerkzeugaufhängung in diesem Ausführungsbeispiel als Elastomer ausgeführt ist. Umgekehrt kann in dieser Ausführungsform das elastische Element 10 eine gewisse Nachgiebigkeit in der Neigungsrichtung, d.h. um die X-Achse, die Y-Achse, und/oder die Z-Achse, hervorrufen. Allerdings handelt es sich bei diesen Elastizitäten nicht um die für die Funktion der Bearbeitungsvorrichtung wesentlichen.

In jedem Fall kann das Schneidwerkzeug 1 der Bearbeitungsvorrichtung, wie insbesondere in der Fig. 3 gut zu erkennen, im Bereich der Leimfuge 8 und des Kantenbands 7 entlang der Längsrichtung des Kantenbands (entlang der X-Achse) geführt werden, um diesen Bereich für das optisch gewünschte Ergebnis nachzuarbeiten. Wie insbesondere in Figur 3 zu erkennen, liegt das Schneidwerkzeug 1 bei dem vorliegenden Ausführungsbeispiel dabei flächig auf der Werkstückoberfläche 9 des Werkstücks 6 auf, wodurch die Schnittbewegung bzw. die Schnitthöhe durch die Kante 7 und/oder die Leimfuge 8 hindurch vorgegeben wird.

Das Ausführungsbeispiel der Figuren 2 und 3 verwendet das Schneidwerkzeug 1 als ausschließliches Tastwerkzeug, um dieses an der Werkstückoberfläche 9 und der Leimfuge entlang zu führen. Es wird bevorzugt, die Tastkraft F ausschließlich durch das Schneidwerkzeug 1 bereitzustellen, und zwar zumindest in einer Raumrichtung. Im vorliegenden Beispiel wird die Tastkraft F auf bevorzugte Weise senkrecht auf die Werkstückoberfläche 9 aufgebracht, um die Leimfuge in ihrer Längsrichtung zu bearbeiten. Es ist zudem möglich, eine weitere Tastkraft bereit zu stellen, die bevorzugt senkrecht auf die Sichtseite des Kantenmaterials 7 aufgebracht wird (y-Richtung in Figur 2 und 3), um das Schneidwerkzeug 1 auch senkrecht zur Vorschubbewegung V relativ zur Leimfuge gleichbleibend zu positionieren.

Zusammenfassend wird somit mit der erfindungsgemäßen Bearbeitungsvorrichtung eine kostengünstige Bearbeitung des Randbereichs des Werkstücks, der Leimfuge und/oder des Kantenmaterials 7 erreicht, da das Schneidwerkzeug exakt an der Referenzfläche, d. h. wie hier gezeigt der Werkstückoberfläche 9, entlang geführt werden kann. Auch etwaiger auftretender Verschleiß des Schneidwerkzeugs 1 wird dabei durch die elastische Einrichtung 2, 10 aufgefangen. Als Ergebnis entfällt das zeitaufwändige und kostenintensive Einstellen einer getrennten im Stand der Technik bekannten Tastvorrichtung.

## Patentansprüche

1. Kantenbearbeitungsvorrichtung zum Bearbeiten eines an einem Werkstück (9) angebrachten Kantenmaterials (7, 8), insbesondere im Bereich einer Leimfuge zwischen Kante und Werkstück, mit
einem Werkzeughalter (4),
einem Schneidwerkzeug (1), das mit dem Werkzeughalter (4) verbunden ist, und
einer elastischen Einrichtung (2, 10), die eingerichtet ist, dem Schneidwerkzeug eine Tastkraft (F) bereitzustellen, sodass es mit einer Werkstückoberfläche in Kontakt bringbar ist,
die elastische Einrichtung (2, 10) eine elastische Schneidwerkzeugaufhängung (2) aufweist,
die elastische Schneidwerkzeugaufhängung (2) dazu eingerichtet ist, eine Schneidkante des Schneidwerkzeugs (1) im Wesentlichen parallel zur Werkstückoberfläche auszurichten, insbesondere im Wesentlichen parallel auf die Werkstückoberfläche aufzulegen, so dass die Schneidkante entlang der Werkstückoberfläche geführt werden kann, und
die elastische Schneidwerkzeugaufhängung (2) zumindest einen rotatorischen Freiheitsgrad aufweist, wobei die Schneidwerkzeugaufhängung (2) zwischen dem Schneidwerkzeug (1) und dem Werkzeughalter (4) angeordnet ist, um die Neigung des Schneidwerkzeugs (1) unmittelbar in der Nähe des Schneidwerkzeugs (1) einzustellen, **dadurch gekennzeichnet, dass** die elastische Einrichtung (2, 10) zweiteilig ausgeführt ist und ferner eine elastische Werkzeughalteraufhängung (10) zum Verbinden mit einer Werkzeugmaschine aufweist, die das Schneidwerkzeug (1) in dessen Zustellrichtung (Z) nachgiebig lagert.

2. Kantenbearbeitungsvorrichtung nach Anspruch 1,
bei der der zumindest eine rotatorische Freiheitsgrad der elastischen Schneidwerkzeugaufhängung dem Freiheitsgrad um die Achse, die senkrecht zur Vorschubrichtung auf der Werkstückoberfläche liegt, entspricht.

3. Kantenbearbeitungsvorrichtung nach einem der vorstehenden Ansprüche,
bei der das Schneidwerkzeug (1) zumindest abschnittsweise eine bogenförmige, bevorzugt kreisförmige, oder polygonale Schneidkante aufweist.

4. Kantenbearbeitungsvorrichtung nach einem der vorstehenden Ansprüche,
bei der die elastische Einrichtung (2, 10) mindestens ein Element aufweist, das aus der Gruppe ausgewählt ist, die eine Feder, einen Dämpfer, eine Hydraulik, eine Pneumatik und ein Elastomer aufweist.

5. Kantenbearbeitungsvorrichtung nach einem der vorstehenden Ansprüche,
bei dem das Schneidwerkzeug (1) ein Fräser, eine Abziehklinge oder ein Messer ist.

6. Verfahren zum Bearbeiten eines an einem Werkstück (9) angebrachten Kantenmaterials (7, 8), insbesondere im Bereich einer Leimfuge zwischen Kante und Werkstück, mit den Schritten:
Bereitstellen eines Werkstücks, auf dem ein Kantenmaterial aufgebracht ist,
Zustellen eines Schneidwerkzeugs (1), sodass eine Schneidkante des Schneidwerkzeugs mit einer von einer elastischen Einrichtung (2, 10) eingestellten Tastkraft (F) aufliegt,
wobei die Schneidkante des Schneidwerkzeugs (1) mittels einer elastischen Schneidwerkzeugaufhängung (2) zwischen dem Schneidwerkzeug und dem Werkzeughalter (4), welche zumindest einen rotatorischen Freiheitsgrad aufweist, im Wesentlichen parallel, zur Werkstückoberfläche ausgerichtet wird, insbesondere im Wesentlichen parallel auf die Werkstückoberfläche aufgelegt wird, um die Neigung des Schneidwerkzeugs (1) unmittelbar in der Nähe des Schneidwerkzeugs (1) einzustellen, während die Schneidkante entlang der Werkstückoberfläche geführt wird, **gekennzeichnet durch** Lagern des Schneidwerkzeugs (1) mittels einer elastischen Werkzeughalteraufhängung (10) zum Verbinden mit einer Werkzeugmaschine derart, dass das Schneidwerkzeug (1) in dessen Zustellrichtung (Z) nachgiebig ist, und
Ausführen einer Vorschubbewegung (V) zwischen dem Schneidwerkzeug (1) und dem Werkstück (9), bei der das Schneidwerkzeug durch die Tastkraft (F) auf der Werkstückoberfläche aufliegt und so Unebenheiten zwischen dem Werkstück, der Leimfuge und dem Kantenmaterial entfernt.

7. Verfahren nach Anspruch 6,
bei dem das Bearbeiten in mehreren Schritten, bevorzugt mit unterschiedlichen Werkzeugen, durchgeführt wird.

8. Verfahren nach einem der Ansprüche 6 oder 7,
bei dem die Tastkraft (F) im Wesentlichen durch eine elastische Werkzeughalteraufhängung (10) eingestellt wird.

9. Verfahren nach einem der Ansprüche 6-8, bei dem die Tastkraft (F) des Schneidwerkzeugs (1) so eingestellt wird, das sie groß genug ist, um der Werkstückoberfläche (9) zu folgen, aber zu niedrig ist, um in diese einzugreifen.

10. Verfahren nach einem der Ansprüche 6-9, bei dem das Schneidwerkzeug (1) ohne Änderung seiner Ausrichtung an der Kante (7), der Leimfuge (8) und/oder der Werkstückkante (6) entlanggeführt wird.

11. Verfahren nach einem der Ansprüche 6-10, bei dem das Schneidwerkzeug (1) als ausschließliches Tastwerkzeug zum Aufbringen einer Tastkraft (F) in einer festgelegten Richtung auf das Werkstück (1) verwendet wird.

## Claims

1. An edge processing device for processing an edge material (7, 8) attached to a workpiece (9), in particular in the region of a glued joint between the edge and the workpiece, comprising
a tool holder (4),
a cutting tool (1) that is connected to the tool holder (4), and
an elastic device (2, 10) that is arranged to provide the cutting tool with a contact force (F) so that it can be brought into contact with a surface of a workpiece,
the elastic device (2, 10) has an elastic cutting tool mounting (2),
the elastic cutting tool mounting (2) is arranged to align a cutting edge of the cutting tool (1) substantially parallel to the surface of the workpiece, in particular substantially parallel to the surface of the workpiece, so that the cutting edge can be moved along the surface of the workpiece, and
the elastic cutting tool mounting (2) has at least one rotatory degree of freedom,
the cutting tool mounting (2) being disposed between the cutting tool (1) and the tool holder (4) in order to set the incline of the cutting tool (1) directly in the vicinity of the cutting tool (1), **characterised in that**
the elastic device (2, 10) is made in two parts and further comprises an elastic tool holder mounting (10) for connection to a machine tool which mounts the cutting tool (1) flexibly in its feed direction (Z).

2. The edge processing device according to Claim 1,
wherein the at least one rotatory degree of freedom of the elastic cutting tool mounting corresponds to the degree of freedom around the axis which lies perpendicular to the advance direction on the surface of the workpiece.

3. The edge processing device according to any of the preceding claims,
wherein the cutting tool (1) has at least in sections an arched, preferably circular or polygonal cutting edge.

4. The edge processing device according to any of the preceding claims,
wherein the elastic device (2, 10) has at least one element which is chosen from the group comprising a spring, a damper, a hydraulic system, a pneumatic system and an elastomer.

5. The edge processing device according to any of the preceding claims,
wherein the cutting tool (1) is a milling tool, a scraper or a knife.

6. A method for processing an edge material (7, 8) attached to a workpiece (9), in particular in the region of a glued joint between the edge and the workpiece, comprising the steps:
providing a workpiece to which an edge material is applied,
delivering a cutting tool (1) so that a cutting edge of the cutting tool is positioned with a contact force (F) set by an elastic device (2, 10),
the cutting edge of the cutting tool (1) being aligned substantially parallel to the surface of the workpiece, in particular substantially parallel to the surface of the workpiece, by means of an elastic cutting tool mounting (2) between the cutting tool and the tool holder (4), which mounting has at least one rotatory degree of freedom, in order to set the incline of the cutting tool (1) directly in the vicinity of the cutting tool (1), while the cutting edge is moved along the surface of the workpiece,
**characterised by** mounting the cutting tool (1) by means of an elastic tool holder mounting (10) for connection to a machine tool such that the cutting tool (1) is flexible in its feed direction (Z), and
executing an advancing movement (V) between the cutting tool (1) and the workpiece (9) in which the cutting tool rests on the surface of the workpiece due to the contact force (F) and so removes unevennesses between the workpiece, the glued joint and the edge material.

7. The method according to Claim 6,
wherein the processing is performed in a number of steps, preferably with different tools.

8. The method according to either of Claims 6 or 7,
wherein the contact force (F) is essentially set by an elastic tool holder mounting (10).

9. The method according to any of Claims 6-8,
wherein the contact force (F) of the cutting tool (1) is set so that it is great enough to follow the surface of the workpiece (9), but is too low to engage in the latter.

10. The method according to any of Claims 6-9,
wherein the cutting tool (1) is guided along the edge (7), the glued joint (7) and/or the workpiece edge (6) without changing its alignment.

11. The method according to any of Claims 6-10,
wherein the cutting tool (1) is used as an exclusive sensing tool for applying a contact force (F) to the workpiece (1) in a set direction.

## Revendications

1. Dispositif d'usinage de chants pour l'usinage d'un matériau de chant (7, 8) monté sur une pièce (9), en particulier dans la zone d'un joint de colle entre le chant et la pièce, avec
un porte-outil (4),
un outil de coupe (1), qui est relié au porte-outil (4), et
un dispositif élastique (2, 10), qui est aménagé pour mettre à disposition de l'outil de coupe une force de palpage (F), de sorte qu'il peut être mis en contact avec une surface de pièce,
le dispositif élastique (2, 10) présente une suspension d'outil de coupe élastique (2),
la suspension d'outil de coupe élastique (2) est aménagée pour orienter un tranchant de l'outil de coupe (1) de manière sensiblement parallèle à la surface de pièce, en particulier pour le poser de manière sensiblement parallèle sur la surface de pièce, de sorte que le tranchant peut être guidé le long de la surface de pièce, et
la suspension d'outil de coupe élastique (2) présente au moins un degré de liberté rotatif,
dans lequel la suspension d'outil de coupe (2) est agencée entre l'outil de coupe (1) et le porte-outil (4) pour régler l'inclinaison de l'outil de coupe (1) à proximité immédiate de l'outil de coupe (1), **caractérisé en ce que** le dispositif élastique (2, 10) est réalisé en deux parties et présente en outre une suspension de porte-outil élastique (10) pour la liaison à une machine-outil, qui loge l'outil de coupe (1) de manière élastique dans sa direction d'approche (Z).

2. Dispositif d'usinage de chants selon la revendication 1,
dans lequel l'au moins un degré de liberté rotatif de la suspension d'outil de coupe élastique correspond au degré de liberté autour de l'axe, qui se trouve perpendiculairement à la direction d'avance sur la surface de pièce.

3. Dispositif d'usinage de chants selon l'une quelconque des revendications précédentes,
dans lequel l'outil de coupe (1) présente au moins par section un tranchant arqué, de préférence circulaire, ou polygonal.

4. Dispositif d'usinage de chants selon l'une quelconque des revendications précédentes,
dans lequel le dispositif élastique (2, 10) présente au moins un élément, qui est sélectionné dans le groupe qui présente un ressort, un amortisseur, un système hydraulique, un système pneumatique et un élastomère.

5. Dispositif d'usinage de chants selon l'une quelconque des revendications précédentes,
dans lequel l'outil de coupe (1) est une fraiseuse, un racloir ou une lame.

6. Procédé d'usinage d'un matériau de chant (7, 8) monté sur une pièce (9), en particulier dans la zone d'un joint de colle entre le chant et la pièce, avec les étapes de :
mise à disposition d'une pièce, sur laquelle un matériau de chant est monté,
approche d'un outil de coupe (1), si bien qu'un tranchant de l'outil de coupe repose avec une force de palpage (F) réglée par un dispositif élastique (2, 10),
dans lequel le tranchant de l'outil de coupe (1) est orienté au moyen d'une suspension d'outil de coupe élastique (2) entre l'outil de coupe et le porte-outil (4), laquelle présente au moins un degré de liberté rotatif, de manière sensiblement parallèle, à la surface de pièce, en particulier est posé de manière sensiblement parallèle sur la surface de pièce pour régler l'inclinaison de l'outil de coupe (1) à proximité immédiate de l'outil de coupe (1), pendant que le tranchant est guidé le long de la surface de pièce,
**caractérisé par** le logement de l'outil de coupe (1) au moyen d'une suspension de porte-outil élastique (10) pour la liaison à une machine-outil de telle sorte que l'outil de coupe (1) est élastique dans sa direction d'approche (Z), et
la réalisation d'un mouvement d'avance (V) entre l'outil de coupe (1) et la pièce (9), dans lequel l'outil de coupe repose par la force de palpage (F) sur la surface de pièce et élimine ainsi les défauts de planéité entre la pièce, le joint de colle et le matériau de chant.

7. Procédé selon la revendication 6,
dans lequel l'usinage est effectué en plusieurs étapes, de préférence avec différents outils.

8. Procédé selon l'une quelconque des revendications 6 ou 7,
dans lequel la force de palpage (F) est réglée sensiblement par une suspension de porte-outil élastique (10).

9. Procédé selon l'une quelconque des revendications 6-8,
dans lequel la force de palpage (F) de l'outil de coupe (1) est réglée de sorte qu'elle est assez grande pour suivre la surface de pièce (9), mais trop faible pour se mettre en prise avec celle-ci.

10. Procédé selon l'une quelconque des revendications 6-9,
dans lequel l'outil de coupe (1) est guidé sans modification de son orientation le long du chant (7), du joint de colle (8) et/ou du chant de pièce (6).

11. Procédé selon l'une quelconque des revendications 6-10,
dans lequel l'outil de coupe (1) est utilisé en tant qu'outil de palpage exclusif pour l'application d'une force de palpage (F) dans une direction définie sur la pièce (1).
